Europäisches Patentamt

European Patent Office

Office européen des brevets

(11) Publication number: **0 579 877 A1**

# EUROPEAN PATENT APPLICATION

(21) Application number: **92202468.2**

(22) Date of filing: **11.08.92**

(51) Int. Cl.5: **E03D 1/14**

(30) Priority: **22.07.92 ES 9201535**

(43) Date of publication of application:
**26.01.94 Bulletin 94/04**

(84) Designated Contracting States:
**DE FR GB GR IT PT**

(71) Applicant: **DESARROLLOS INDUSTRIALES POZUELO DE ALARCON, S.L.**
**Plaza Mayor 2, 1o B**
**E-28223 Pozuelo de Alarcon, Madrid(ES)**

(72) Inventor: **Sanchez G mez, José Luis**
**Plaza Mayor, 2, 1 B**
**E-28223 Pozuelo de Alarcon, Madrid(ES)**
Inventor: **Carmona Calderon, Francisco**
**Plaza Mayor, 2, 1 B**
**E-28223 Pozuelo de Alarcon, Madrid(ES)**

(74) Representative: **Urizar Anasagasti, José Antonio**
**Doctor Fleming, 43**
**E-28036 Madrid (ES)**

(54) **Double flushing device for toilet cisterns in order to save water.**

(57)  Double flushing device for toilet cisterns in order to save water, which has a straight parallelpiped shape with a manual double flushing device (1,3), concentric or separated, or just as well two lateral levers (2), one of said flushing devices (1,3) being devised for reduced water consumption. Each of the levers (2,4) possesses a piston (15,16) inside of a cylinder (17,18) for the evacuation of water and the filling up that follows, each pair of piston (15,16) and cylinder (17,18) being independent and connected by a communicating elbow (7), in the form of a communicating vessel, at their lowermost part. Depending on the given need, one or the other can be chosen, thus evacuating different amounts of water according to the specific characteristics of the cylinders (17,18) of each flushing device. The smaller volume flushing device yeilds approximately one fourth of the drainage volume of the complete evacuation device, which empties the entire content of the cistern (c).

FIG. 1

The object of the present invention is a double flushing device for toilets, the type normally used in restrooms and bathrooms, which posseses a water saving system based on said double flushing device. Each of the flushing devices contains a piston inside of a cylinder for drainage and fill-up. Both flushing devices are independent and connected at their lowermost part by an elbow joint, like a communicating vessel. By choosing one or the other, different amounts of water are evacuated, depending on the specific need, thus saving a considerable amount of water. The evacuation of water in the smaller flushing device is only 25% of the total volume, and the other empties the water completely from the cistern.

BACKGROUND OF THE INVENTION

Existing toilet cisterns currently possess only one manual flushing device, located normally on the geometric center of the upper face of the parallelpipe from which it is formed. Upon effecting the water evacuation, said flushing device vertically lifts a rod, concentric to the piston movement cylinder, thus leaving the circular drainage exit free and evacuating all of the water from the cistern. Once this operation has been carried out, the piston moves down and covers the exit, and the water enters to fill the cistern again. The liquid evacuated with this system is excessive for the majority of its uses, resulting in a disproportionate consumption of water.

DESCRIPTION OF THE INVENTION

The double flushing device consists of making an interconnected housing piece for the drainage systems. Said pieces can be incorporated in all newly built toilets and those that are already in use, in the latter case by way of an adaptation without modifying the cistern.

With the first, or reduced evacuation flushing device, only a small amount, preferably a 25% of the total capacity of the cistern is emptied. With the second, or complete evacuation flushing device, the drainage is 100%.

In order to better describe the important characteristic of the subject matter of the invention regarding saving water in a practical case, the following example is provided:

Statistically considering that the average person uses the toilet four times a day, three of which only require the reduced water evacuation, the following deduction is made:

Each time a toilet is flushed, the normal consumption is twelve liters of water. With the reduced evacuation the consumption is reduced to 25%, or three liters, which is a savings of nine liters for each use.

Keeping in mind the number of people in for example Spain who make use of a toilet, approximately 30 million, the savings produced by this system would be:

30 million people x 9 liters x 3 uses/day = 810 million liters/day

This amounts adds up to 295,650,000,000 cubic meters per year, or in other words, an economic savings of nearly 20.000.000.000 pesetas.

DESCRIPTION OF DRAWINGS

FIGURE 1: General front view of the toilet cistern in a corss-section representation according to a vertical plane, where the double flushing device is perceived.

FIGURE 2: Detail of the two flushing devices with their respective bars.

FIGURE 3a: A front view in a cross-section representation of the detail of the interconnection elbow between the evacuation cylinders.

FIGURE 3b: Top view of the interconnection elbow between the evacuation cylinders.

FIGURE 4: General front view of the toilet cistern in a cross-section representation according to a vertical plane, showing two variants of placement of the two independent flushing devices in the cistern.

DESCRIPTION OF THE PREFERRED EMBODIMENT

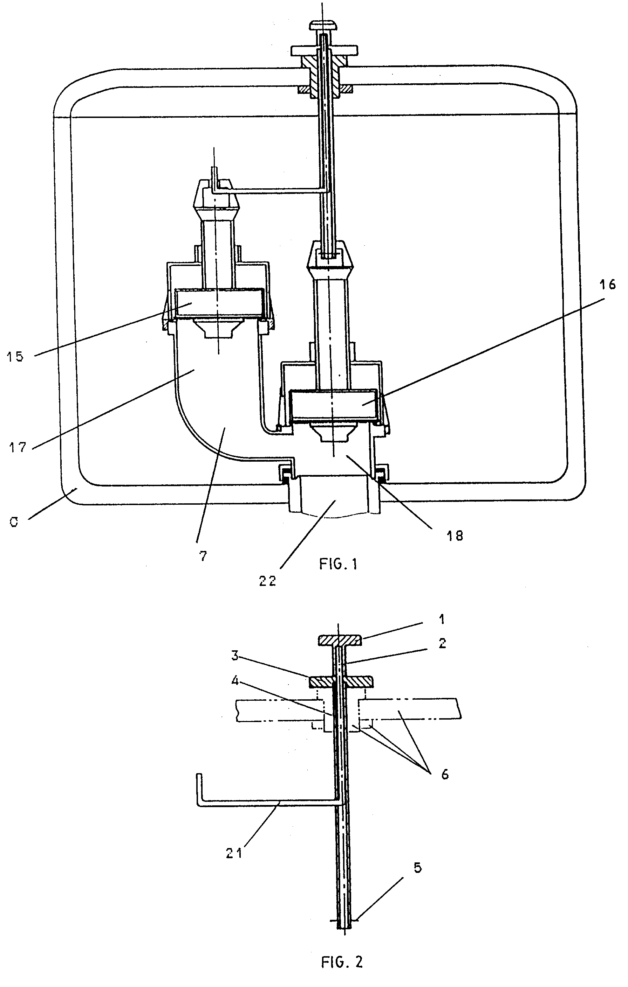

In figure 1, where a general view of the internal make up of the cistern (C) is perceived, it may be observed that the two flushing devices (1) and (3) are concentric as well as the rods respective (2) and (4) thereof, up to a height of approximately a third of the total height of the cistern (C). From this point, the rod (2) corresponding to the reduced evacuation flushing device diverges horizontally (21), perpendicular to the other (4), both of them acting upon their corresponding pistons (15) and (16), placed in the interior of their cylinders (17) and (18).

Either in the case of the complete evacuation flushing device (3), or the reduced evacuation flushing device (1), the evacuation is carried out by a lifting action of the correpsonding flushing device which in turn lifts a respective piston (16) or (15) by means of their respective rods (4) or (2), thus evacuating completely, in the first case, or partially in the second, the water. Once terminated this operation, the respective piston (16) or (15) is lowered to its initial position and the cistern (C) fills up again to the maximum level of water

The lower parts of the corresponding cylinders (18) and (17) are interconnected by a communicating elbow (7), located in a side of the cylinder of complete evacuation (18) in the form of a communicating vessel.

As shown in figure 2, the reduced evacuation flushing device (1) is connected to the bar (2) which in turn passaes through the complete evacuation flushing device (3) which is connected to a bar (4) having the shape of a tube. Said bar (2) is extended in tube (4) up to a hight of approximately a third of the hight of the cistern. Bar (2) diverges at this point in a horizontal and perpendicular direction (21) with respect to bar (4) passing through a longitudinatl slot in the rod (4).

Additionally in figure 2 the upper lid of the cistern is partially shown (6) as well as a cistern limit washer (5).

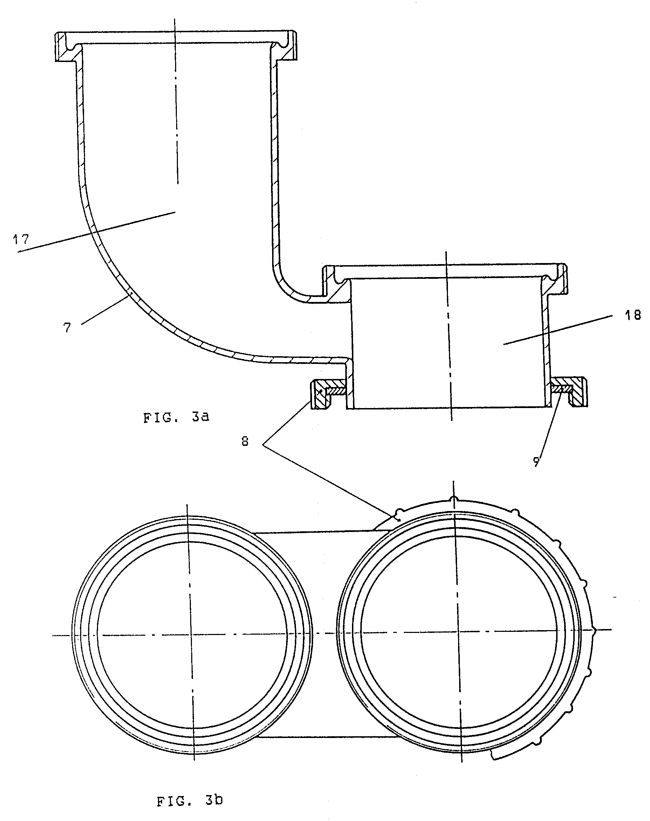

Figure 3a shows the detail of the communication elbow (7) between the cylinders (17) and (18), where the following may be perceived: said communicating elbow (7), assembling nut (8), and the locking and securing joint (9). The top view of the commuincating elbow (7) is shown in figure 3b in which the assembling nut (8) can also be observed.

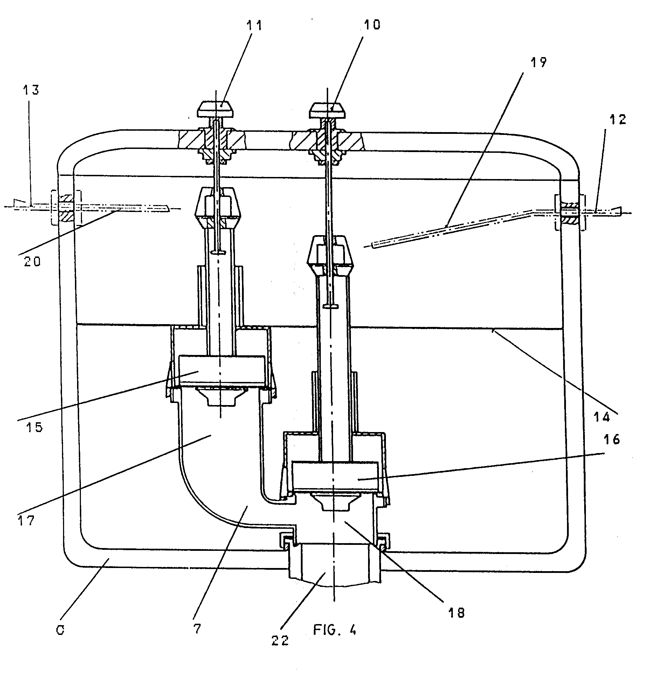

Figure 4 shows two variants of the improved double flushing device in a toilet cistern, representing in both cases two flushing devices in a nonconcentric position, where the following may be perceived: according to one variant, a complete evacuation flushing device (10), a reduced evacuation flushing device (11), each located on the upper lid of the cistern (C) in separated positions; according to another variant the lateral adaptation of two levers can be observed one of which being the complete evacuation lever (12), and the other being the reduced evacuation lever (13); the full water level (14) in the cistern is also shown in figure 4.

The operational characteristics of both abovementioned variants are the same as the one described previously for a concentric double flushing device. The difference with respect to the device of figure 1 is in one case, in the separate, and nonconcentric positioning of the the devices (10) and (11) located vertically on the upper lid, and in the other case in the lateral positioning of levers (12) and (13) which connect to the pistons (16) and (15) respectivly (connections are not shown in figure 4 in order to maintain simplicity ) by means of respective arms (19) and (20) shown by broken lines in the drawing of figure 4.

In any of the variants described above, piston (15) corresponding to the reduced evacuation flushing device and piston (16) corresponding to the complete evacuation flushing device are located at certain hights over the cistern's bottom in which the drainage outlet (22) of water is located. This fact provides that during the operation a certain level of residual water is maitained in the cistern. Therefore when the drainage is taking place the noise produced is considerably reduced.

Once the nature of the present invention and a manner of embodiment of the same have been sufficiently described, it only remains to be added that changes in form, materials, and disposition can be made in the invention as a whole or in the parts that compose it, as long as such alterations do not substantially vary the characteristics of the invention, which are claimed as follows:

## Claims

1. Double flushing device for toilet cisterns, the type normally found in restrooms and bathrooms, in order to save water, characterized in that the cistern includes two manual flushing devices situated either in a concentric form on the upper lid of said cistern, or in a sparated form located in this case either on the upper lid of the cistern or on the lateral sides of the same as levers. One of the two mentioned flushing devices serving for a partial evacuation, reducing the consumption of water, and the other flushing device for carying out a complete evacuation, each of which possesing a piston inside a cylinder for the evacuation of water and the filling up that follows, both being independent and connected by a communicating elbow, in the form of a communicating vessel, at their lowermost part. Depending on the given need, one or the other can be chosen, thus evacuating different amounts of water according to the specific characteristics of the cylinders of each flushing device.

2. Double flushing device for toilet cisterns in order to save water, according to the first claim, characterized in that in the case of concentric flushing devices, the reduced evacuation flushing device has a bar which vertically and longitudinally passes through a second hollow bar with larger diameter, which is connected to the complete evacuation flushing device, said first bar passing longitudinally through said second bar up to an approximate hight of a third of the hight of the cistern, diverging then in that point through a slot of said second bar in a horizontal and perpendicular direction with respect to the mentioned second rod.

3. Double flushing device for toilet cisterns in order to save water, according to the previous claims, characterized in that by choosing either the reduced evacuation device or the complete evacuation device, referring to the action upon their respective pistons, the corresponding rod lifts the piston with respect to its cylinder, be it the entire amount with the central piston or the partial amount with the piston located on the side of the cistern, elevated with respect to the first piston. Once this operation has been carried out, the piston is lowered to its initial position and the cistern once again fills up to its maximum level.

4. Double flushing device for toilet cisterns in order to save water, according to the previous claims, characterized in that when the two flushing devices are situated in a non-concentric manner, either in the case where both are situated on the upper surface of the cistern, or in the case where they are situated on the lateral sides of the cistern, there is a lever for normal use and another for low consumption use.

5. Double flushing device for toilet cisterns in order to save water, according to the previous claims, characterized in that the reduced evacuation flushing device yields approximately one fourth of the drainage volume of the complete evacuation flushing device which empties the entire content of the cistern.

6. Double flushing device for toilet cisterns in order to save water, according to the previous claims, characterized in that both the reduced evacuation piston and the complete evacuation piston are located at certain hights over the cistern's bottom in which the drainage outlet of water is located, therefore providing a level of residual water higher than the drainage outlet of water, for which during the operation the level of noise is considerably reduced.

FIG. 1

FIG. 2

FIG. 3a

FIG. 3b

FIG. 4

European Patent Office

# EUROPEAN SEARCH REPORT

Application Number

EP    92 20 2468

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-3 200 827 (H. STROHAUER)<br>* page 6, line 31 - page 7, line 32; figures * | 1-4 | E03D1/14 |
| Y | | 5 | |
| Y | DE-A-3 210 478 (B. PFEIL)<br>* the whole document * | 5 | |
| A | | 1,4 | |
| X | GB-A-1 530 490 (A. DEAKIN)<br>* page 2, line 81 - page 3, line 85; figure * | 1,3,4 | |
| X | DE-A-3 932 408 (D. AHRENS)<br>* column 2, line 45 - column 3, line 40; figures * | 1,3,4 | |
| A | US-A-5 121 510 (C. MEDINA)<br>* figure 2 * | 1,6 | |

-----

|  |
|---|
| TECHNICAL FIELDS SEARCHED (Int. Cl.5) |
| E03D |

The present search report has been drawn up for all claims

| Place of search | Date of completion of the search | Examiner |
|---|---|---|
| THE HAGUE | 08 OCTOBER 1993 | KRIEKOUKIS S. |